# EUROPEAN PATENT SPECIFICATION

(11) **EP 2 747 868 B1**
(45) Date of publication and mention of the grant of the patent: **13.12.2017**
(21) Application number: 12799585.0
(22) Date of filing: 03.10.2012
(51) Int. Cl.: B01D 29/11, B01D 29/52, B01D 29/66, B01D 29/90, B01D 36/04

(54) **PRESSURE FILTER**
DRUCKFILTER
FILTRE SOUS PRESSION

(30) Priority: 04.10.2011 FI 20115973
(43) Date of publication of application: 02.07.2014
(73) Proprietor: Andritz Oy, 00180 Helsinki (FI)
(72) Inventor: HOLOPAINEN, Ilkka, FI-57101 Savonlinna (FI); LAPPALAINEN, Kari, FI-57101 Savonlinna (FI)
(74) Representative: Hoffmann Eitle
(86) International application number: PCT/FI2012/050946
(87) International publication number: WO 2013/050654

(56) References cited:
- EP-A1- 0 947 230
- WO-A1-93/24217
- WO-A1-97/37746
- WO-A1-98/50131
- AT-B- 229 236
- DE-A1- 3 015 276
- DE-A1- 10 053 649
- DE-A1- 10 100 145
- DE-C- 834 636
- DE-U1-202004 005 849
- FR-A- 1 104 542
- GB-A- 323 719
- GB-A- 737 457
- US-A- 2 423 172
- US-A- 2 570 132
- US-A- 3 698 555
- US-A- 4 906 264

## Description

### OBJECT OF THE INVENTION

The present invention relates to a pressure filter for treating solids suspensions comprising a container having a feed conduit for introducing a suspension to be filtered under pressure, and an outlet conduit for discharging the thickened suspension from the bottom of the container, and a plurality of tubular filtering elements suspended from a horizontal support plate, through which elements filtrate flows and the interior of elements which communicates with a filtrate chamber located on the opposite side of the support plate, and the filtrate is arranged to be discharged during a filtering stage via a filtrate outlet conduit exiting from the filtrate chamber, and the filtering elements collect solid matter on their outer surface, which solid matter is arranged to be periodically released by making the filtrate in the filtrate chamber pass counter-currently through the filtering elements and to settle onto the bottom of the container.

### PRIOR ART

When producing chemical pulp by the sulfate method, spent cooking liquor, i.e. black liquor, is evaporated and combusted, and the obtained residual, i.e. so-called soda smelt is dissolved in water to green liquor that contains sodium carbonate and sodium sulfide. Green liquor contains also insoluble substances, such as metal oxides, which are to be removed so that they will not get enriched into the chemical circulation. The separation of so-called green liquor dregs containing these non-process elements from green liquor typically takes place in a clarifier or a filter. The green liquor dregs is thickened and washed usually in a so-called dregs filter. The cleaned green liquor is causticized into new cooking liquor. In the causticizing, the sodium carbonate in the green liquor is let to react with burned lime (CaO) as follows.

White liquor containing sodium hydroxide and calcium carbonate (lime mud) thus obtained are separated and the white liquor is circulated to pulp cooking. The separation of white liquor and lime mud can be performed either in a clarifier or by means of filtration. White liquor filters are typically usual sock (candle) filters or disc filters that are either pressure or vacuum filters. The lime mud is washed for removing alkali therefrom. The lime mud is thickened and washed in a lime mud filter for burning usually in a calcination device, such as a lime kiln, wherein the lime mud is regenerated to burnt lime (calcium oxide) for being returned back to causticizing.

A pressure filter that has long been used at the causticizing plant is a filter that has tubular filtering elements and that is used for lime mud washing and filtering of white liquor and green liquor. The filter is also referred to as a sock filter. Therein a liquor suspension, such as lime milk, is pumped into a pressure vessel, where the liquor passes via tubular filtering elements into a filtrate chamber, while a portion of the solids, such as lime mud, remains on the filtering surface. The coarser fraction settles into the lower part of the filter, which acts as a settling and storing space for the lime mud. When the thickness of the lime mud cake on the surface is adequate (e.g. after 3-5 minutes), the liquor filtrate is made to flow into the opposite direction through the filtering elements (e.g. for 1-10 seconds) for releasing the lime mud cake from the filtering surface. After a short period (typically 30 seconds) the released lime mud begins to settle towards the bottom of the filtering vessel, and a new filtering cycle can begin. Settled lime mud is continuously removed from the bottom of the filtering vessel at a solids content of approximately 40-50% into a washing stage, which usually is dilution washing. Washing liquid is added into the lime mud in a mixing tank, from where the lime mud suspension is pumped to a filter, which may be a similar type of pressure tube filter or a band filter. This kind of pressure filter is disclosed e.g. in US-patent 4243533 (Fl patent 55937).

The solids suspension to be filtered is typically fed into the upper part of the container in the vicinity of the filtering socks. US-patent 4528103 discloses a sock filter, where the feed conduit extends into the interior of the filtering container into the center part. The end of the feed conduit has a funnel-shaped extension, through which the suspension is discharged to the vicinity of the upper end of the sock filters.

When a suspension containing abundantly of solids is introduced in the vicinity of the filtering elements, a risk exists that solid matter remains between the closely located elements, which disturbs both the actual filtering operation and the removing of the solids cake from the surfaces of the elements.

In the filters described above, the part of the filtering container below the filtering elements acts as a settling and storing area. The use of this part of the container can be regarded inefficient, when the actual active filtering operation is concentrated in the upper part.

WO-A1-93/24217 discloses a unit for treating liquid, comprising a cylindrical container which in an upper chamber has a set of slender tubes which the liquid is forced to pass on its way from an inlet to an outlet of the container, so as to be subject to a treatment such as deionisation during this forced passage.

DE 100 53 649 A1 discloses a filter arrangement, especially for separating solids from liquid media, comprising a housing with an inlet opening, an outlet opening, a filter element, and a separation chamber. The separation chamber is screened by a screening element.

### DESCRIPTION OF THE INVENTION

An object of the present invention is to eliminate above mentioned problems. An object of the invention is to improve the feed of a solids suspension so that accumulation of solids in locations that disturb the operation of the apparatus is minimized or prevented. An object of the invention is to improve the use of the interior of the filtering container to intensify the filtering.

An essential feature of the present pressure filter is that a cylindrical piece is arranged in the container below the filtering elements and a feed conduit is connected to the cylinder for leading the suspension into the interior of the cylinder.

The cylinder has an open upper surface and an open lower surface. The cylinder is defined by a cylindrical side wall, which typically is vertical. The suspension is led via the open upper part of the cylinder to the filtering elements.

According to a preferred embodiment, the cylinder is a circular cylinder that is concentric with the container and its wall is at a distance from the inner wall surface of the container.

According to an embodiment, the cylinder is located below a middle elevation of the filtering container. The bottom part of the cylinder is located at a distance from the bottom of the container to provide adequate space below the cylinder for the suspension to be removed.

An essential idea of the invention is that the solids-containing suspension is led into the lower part of the filtering container where separation of the solids by settling onto the bottom of the container can start immediately. The coarsest fraction settles the fastest. The settling continues and more material is settled as the suspension passes in the vertical direction towards the filtering elements. Thereby, a portion of the solids is separated from the suspension, prior to the actual filtering. As is known, the suspension has earlier been fed close to the filtering elements, whereby in the vicinity of the filtering elements there is more solid matter that may accumulate therebetween and clog their filtering surfaces faster. The invention utilizes the space below the filtering elements of the filtering container by using it as a pre-settling space during the feeding stage.

The suspension is introduced to a distance from the container wall into the interior of the cylinder part. The solids suspension is introduced into the cylinder via a tangential inlet opening located in the cylinder wall. Thereby, a swirling motion of the suspension is generated, which assists the separation of solids from the suspension during settling.

According to an embodiment, at least one deflector is arranged into the inner wall of the cylinder, or a plurality of deflectors at a distance from each other, such as flow deflection plates, for decelerating the swirling motion of the tangentially fed suspension. The purpose of these swirl deflectors is to decelerate and attenuate the swirl and to guide the flow, whereby solid matter is better released from the suspension and the solids flow directed downwards.

The feed cylinder typically comprises at least two, preferably four parts attached to each other, which are formed by dividing the housing wall of the cylinder vertically to parts. The vertical parts of the cylinder are attached to each other typically with flange joints. Also other joining ways are possible. Thus, it is possible to mount the cylinder into an existing pressure filter, because the cylinder parts can fit into the interior of the filtering container through a manhole.

Said deflector plates can preferably be mounted in connection with the flange joints. They extend from the inner surface of the cylinder into the interior of the cylinder to a desired distance. The mounting angle of the deflector plate is preferably adjustable. It can be used for guiding the tangential flow downwards at an angle of 0-40 degrees, e.g. 5-35 degrees.

According to an embodiment a widening, cylindrical extension is connected to the bottom part of the cylinder, a wall of which extension is perforated. The conical extension part has essentially open upper and lower surfaces. In addition to clarification, this kind of pre-separator can be used for pre-filtering the solids suspension introduced into the cylinder. A portion of the suspension introduced into the cylinder flows into the lower conical part and through its walls so that solid matter remains on the inner surface of the cone. The pre-filtered suspension then flows towards the filtering elements for final filtering. Thereby, more solids from the suspension can settle. Pre-filtering decreases the amount of solids remaining on the filtering elements. The pre-filtered suspension also dilutes the suspension fed into the container with respect to solids, whereby the solid matter of the suspension settles better in the space below the filtering elements.

The filtering cloth of the wall of the pre-filtering part is less dense than the filtering cloth of the filtering elements, since the purpose is to separate coarser material prior to the filtering elements. It also decreases the clogging of the filtering surface of the elements. The filtering surface of the pre-filter is smaller than the filtering surface formed by the filtering elements. The pre-filtering surface can be approximately 5-20 % of the area of the filtering elements.

The diameter of the upper edge of the pre-filtering part is smaller than the diameter of the lower edge, typically by approximately 10-40 %. The height of the pre-filtering part is greater than the height of the feed cylinder part, typically approximately 2-3 fold. The diameter of the upper edge of the pre-filtering part is essentially as large as the diameter of the feed cyclone. The pre-filter is attached at its upper part to the feed cylinder.

The pressure filter according to the present invention, having a feed cylinder, is advantageously suited for separating white liquor and lime mud, as a lime mud washing filter and for green liquor filtering, especially for polishing filtering of clarified green liquor at a chemical pulp mill. The combination of a cylinder and a conical pre-filter is suitable especially for treating a suspension containing fine-grained solid matter, such as green liquor.

As advantages of the invention can be mentioned: increase of the capacity of the filter, decrease in the solids content of the filtrate, increase in the discharge thickness of the precipitate, extension of the filtration cycle, increased replacement interval of the filtering elements, whereby maintenance costs are decreased, and improved reliability of operation.

An advantage worth mentioning is also a decrease in alkali losses at a causticizing plant of a chemical pulp mill.

FI-patent application 20115262 presents that the interior of the filtering elements is provided with a flow distributor that is arranged above the middle part of a filtering element for distributing the flow led from the filtrate chamber onto the filtration surface of the filtering element. These flow deflector plates further improve the construction according to the present invention, since also the running philosophy of the pressure filters changes. The filtering cycle is extended and the so-called back-flow cycle can be extended if needed, i.e. a capacity increase is obtained.

At a causticizing plant of a chemical pulp mill the invention further allows essential changes in the practice of running the pressure filter. If needed, a portion of the solids suspension, such as lime milk, can thus be fed into the upper part of the pressure filter container as known per se for formation of a precoat, if it is considered necessary in some situation. Alternatively, all the lime milk can be fed into the bottom part of the filter. In a so-called over-calcination situation or when commercial lime is used, the pressure filter operates better, since the clarification space of lime mud is essentially improved by means of this novel feed method.

The solids suspension feed arrangement according to the present invention can also simply be applied for existing pressure filters. The required modification is easy to accomplish in connection with an appropriate shutdown.

### BRIEF DESCRIPTION OF THE DRAWINGS

The present invention is described in more detail by means of a filter embodiment according to the invention and with reference to the accompanying schematic drawings, in which:
Fig. 1 illustrates a prior art pressure filter provided with tubular filtering elements, and the operation thereof;
Fig. 2 is a schematic drawing of a preferred embodiment of a pressure filter according to the invention;
Fig. 3 illustrates in more detail the pressure filter according to the figure along section B-B;
Fig. 4 illustrates as a side view a preferred embodiment of a feed cylinder, and
Fig. 5 illustrates an embodiment of the feed cylinder and the cone connected thereto from above and as a side view.

### DETAILED DESCRIPTION OF THE INVENTION

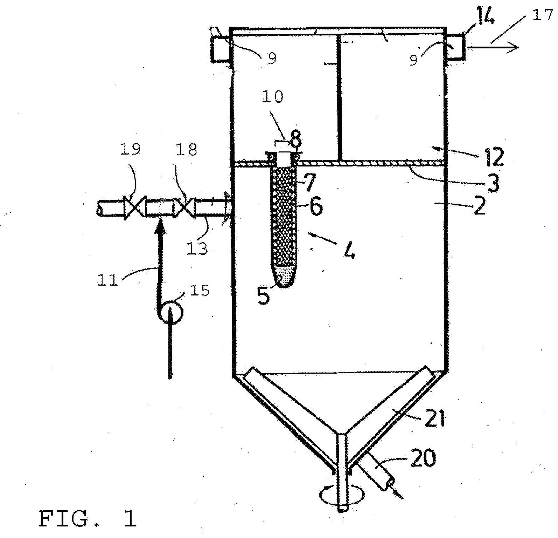

In Fig. 1 the suspension to be filtered, i.e. for instance lime milk containing white liquor and lime mud flows into a filtering container 2 from a lime milk container (not shown) along a feed conduit 11, 13 under the influence of pressure generated by a feed pump 15 in the suspension inlet conduit 11. Then valve 19 is in a closed state and valve 18 open. The container 2 is provided with a horizontal plate 3, from which tubular filtering elements 4 are suspended. The number thereof may be e.g. 200, but only one is shown in the drawings, considerably enlarged. The white liquor of lime milk is filtrated under pressure prevailing in the filtering container 2 through a sock 5 in the filtering element and solids in the lime milk, i.e. lime mud is deposited onto the surface of the filtering sock as a layer 6. The tubular filtering element is formed of a filtering cloth and a solid metallic perforated pipe 7 inside it, which prevents the sock from collapsing. The metal pipe 7 is welded to a flange 8 that is mounted on the horizontal plate 3. The filtrate, i.e. white liquor flows into a filtrate chamber 12 above the plate 3, from which chamber the white liquor flows via an overflow edge or openings 9 into a chute 14 and therefrom via a pipe 17 into further treatment.

The removal of solid matter settled onto the sock 5 is accomplished as follows: The valve 19 is also opened. The hydrostatic pressure of liquid in the filtrate chamber 12 forces the filtrate (white liquor) to flow back through the elements 5, whereby the solids layer 6 is released from the surface of the elements. This cake-removal stage takes e.g. 2-10 seconds. Then follows the settling stage (typically 30 seconds), whereby the valve 18 is closed and the precipitate begins to settle towards the bottom of the filtering vessel and drops onto the bottom of the container 2. The precipitate exits via discharge pipe 20 and a rotating blade 21 prevents the precipitate from sticking onto the bottom of the container 2. After that begins the filtering stage again, whereby valve 18 is open and valve 19 is closed. The feed pump 15 is not stopped during the stages, but it rotates. In the cake-removal stage the rotations of the pump drop and in the settling stage the pump rotates at a constantly decreasing speed. Just before turning the valves back to the filtration stage, the rotational speed of the pump is increased, so that the pump starts pumping immediately and a so-called back-flow is prevented.

At certain intervals the filter has to be washed. Therefore the filtering container is emptied. The washing takes place in a similar way as the cake-removal, but now washing water, which is acid or water, is introduced through a filtrate manifold, a hot water line or an acid line 17. In acid washing, the acid solution is circulated several times via an acid container (not shown) through a filter. In water washing, the water is taken only once through the filter.

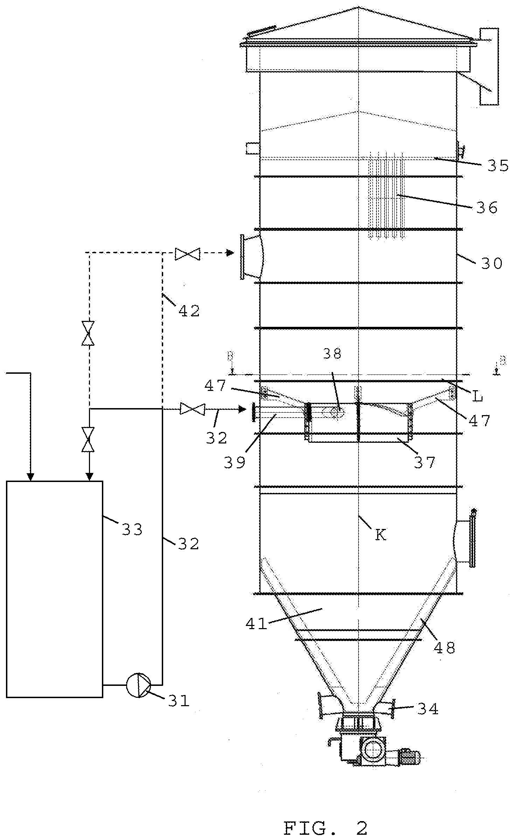

Figure 2 illustrates an embodiment of the pressure filter according to the present invention.

The filter comprises a container vessel 30 provided with a feed pipe 32 having a feed pump 31 for feeding the suspension to be filtered under pressure into the container from a feed container 33. The bottom of the filter container is provided with a discharge pipe 34 for discharging the thickened suspension from the bottom of the container. A number of tubular filtering elements 36 suspended from a horizontal support plate 35 are located in the upper part of the container. The number thereof may be e.g. 200, but only a few are shown in the drawing. Their structure is typically similar to that described in connection with Figure 1.

In accordance with the invention, a cylindrical piece 37 is arranged in the container 30 below the filtering elements 36, and the feed pipe 32 is connected to the cylinder via a conduit 39 for leading the solids suspension to be filtered into the interior of the cylinder. According to a preferred embodiment, the cylinder 37 is a circular cylinder that is concentric with the container 30 in relation to the central axis K. The cylinder 37 is located at a distance from the inner surface of the wall of the container 30.

Preferably the cylinder 37 is located below a middle elevation L of the container 30.

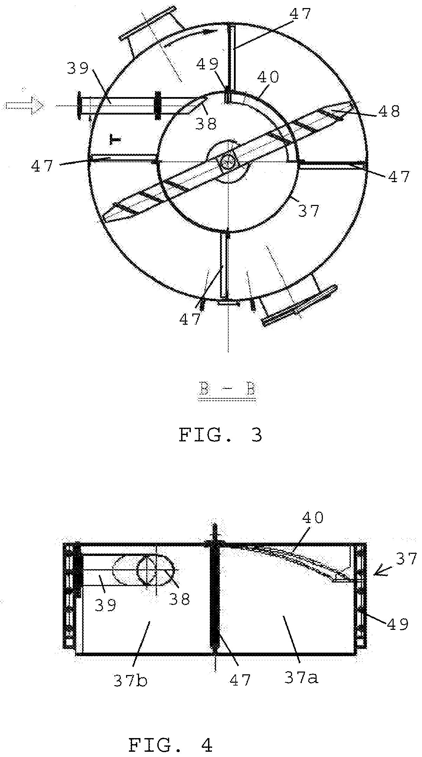

The solids suspension is fed into the cylinder via a tangential feed opening 38 (fig. 4) in the container wall, which opening is connected to the suspension feed pipe 32 via the conduit 39. By means of tangential feed, a swirling motion of the suspension in the cylinder is accomplished.

According to an embodiment, deflectors are arranged on the inner wall of the cylinder at a distance from each other, such as deflector plates 40, for decelerating the swirling motion of the tangentially fed suspension. The purpose of these swirl deflectors 40 is to decelerate and guide the swirl, whereby solid matter is better released from the suspension.

According to the invention, the solids-containing suspension is led into the lower part of the filtering container where separation of the solids by settling onto the bottom 41 of the container can start immediately. The coarsest fraction settles the fastest. The settling continues and more material is settled as the suspension travels in the vertical direction towards the filtering elements 36. Thereby, a portion of the solids is separated from the suspension, prior to the actual filtering. As is known, the suspension has earlier been fed close to the filtering elements, as shown in Fig. 2 by means of a pipe 42, whereby in the vicinity of the filtering elements 36 there is more solid matter that may accumulate between them and clog their filtering surfaces faster. The invention utilizes the space below the filtering elements of the filtering container by using it as a pre-settling space during the feeding stage. A mixer 48 is located on the bottom of the container, as known per se. The feed cylinder 37 typically comprises at least two, preferably 4 parts 37a and 37b attached to each other (Fig. 4.) These vertical parts of the cylinder are attached to each other typically with flange joints 49. Thus, it is possible to mount the cylinder in parts into an existing pressure filter, because the cylinder parts can fit into the interior of the filter housing through a manhole. The swirl deflection plates can preferably be mounted in connection with the flange joints.

The cylinder 37 is supported to a support structure mounted in the inner wall of the filter. E.g. support rods 47 are mounted at a distance from each other on the inner wall of the container. The cylinder is arranged to be suspended supported from them (Fig. 2 and 3). Fig. 3, which is a cut view B-B of fig. 2, illustrates a deflector plate 40 that is attached to a flange 49. The feed cylinder 37 receives the solids suspension to be treated via a conduit 39 and a feed opening 38. A mixer 48 is located on the bottom of the pressure filter vessel, as known per se.

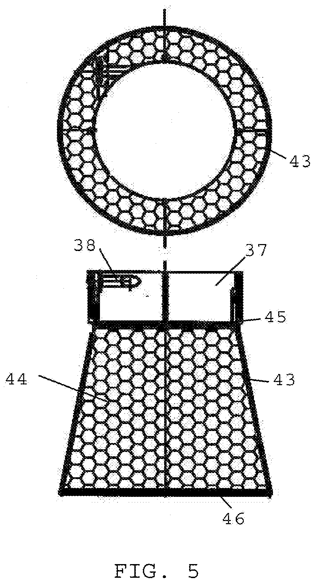

Figure 5 illustrates an embodiment, in which the bottom part of the cylinder 37 is provided with a conical, downwards widening extension part 43 with a perforated wall 44. The conical extension part has essentially open upper and lower surfaces. In addition to clarification, this kind of pre-separator can be used for pre-filtering the solids suspension introduced into the cylinder. A portion of the suspension introduced into the cylinder flows into the lower conical part and through its walls so that solid matter remains on the inner surface of the cone. The pre-filtered suspension then flows towards the filtering elements for final filtering. Thereby, more solids can settle therefrom.

The filtering cloth of the wall 44 of the pre-filtering cone 43 is less dense than the filtering cloth of the filtering elements 36, since the purpose is to filter off coarser material prior to the filtering elements. It also decreases the clogging of the filtering surface. The filtering surface of the pre-filter is essentially smaller than the filtering surface formed by the filtering elements.

The diameter of the upper edge 45 of the pre-filtering cone 43 is smaller than the diameter of the lower edge 46, typically by approximately 10-40 %. This pre-filtering part widens downwards, because thus it allows preventing fine-grained precipitate from rising backwards from the bottom of the container.

The height of the pre-filtering part is greater than that of the feed cylinder part, typically approximately 2-3 fold. The diameter of the upper edge 45 of the pre-filtering part is essentially as large as the diameter of the feed cylinder 37. The pre-filter is at its upper part attached to the feed cylinder by a suitable method, e.g. by welding.

The pre-clarified and possibly pre-filtered suspension flows to the filtering elements 36, through which the filtrate flows. The interiors of the elements 36 communicate with a filtrate chamber 48 located at the opposite side of the support plate 35. The filtrate exits the filtrate chamber during the filtering stage through a filtrate discharge conduit 49 exiting from the filtrate chamber.

The filtering elements 36 collect on their outer surface solid matter that is arranged to be periodically released by making the filtrate in the filtrate chamber pass counter-currently through the filtering surface of the filtering elements, as described in connection with figure 1. The precipitate settles onto the bottom 41 of the container.

If needed, a portion of the solids suspension, such as lime milk, can be fed into the upper part of the pressure filter container as known per se for formation of a precoat, if it is considered necessary in some situation. For this purpose, a suspension feed line 42 is connected as known per se to the upper part of the filter.

Although the above description relates to an embodiment of the invention that is in the light of present knowledge considered the most preferable, it is obvious to a person skilled in the art that the invention can be modified in many different ways within the scope of the invention as defined by the appended claims.

## Claims

1. A pressure filter for treating solids suspensions, comprising a container (30) having
- a feed conduit (32) for introducing a suspension to be filtered into the container (30) under pressure,
- an outlet conduit (34) for discharging the thickened suspension from the bottom of the container (30), and
- a plurality of tubular filtering elements (36) suspended from a horizontal support plate (35), through which elements filtrate flows, and the interior of which elements communicates with a filtrate chamber located on the opposite side of the support plate (35), and the filtrate is arranged to be removed during a filtering stage through a filtrate outlet conduit (34) exiting from the filtrate chamber,
wherein the filtering elements (36) collect solid matter on their outer surface, which solid matter is arranged to be periodically released by making the filtrate in the filtrate chamber pass counter-currently through the filtering elements (36), and which solid matter settles onto the bottom of the container (30),
**characterized in that**
a cylindrical piece (37) is arranged in the container (30) below the filtering elements (36), and the feed conduit (32) is connected to the cylindrical piece (37) for leading the suspension into the interior of the cylindrical piece (37),
wherein the cylindrical piece (37) has an open upper surface and an open lower surface, and
wherein a tangential inlet (38) for the suspension is arranged in the cylindrical piece (37), the tangential inlet (38) being arranged so as to introduce the suspension at a distance from an inner surface of the container wall into the interior of the cylindrical piece.

2. A pressure filter according to claim 1, wherein the cylindrical piece (37) is concentric with the container (30) and at a distance from the inner surface of the container wall.

3. A pressure filter according to any of the preceding claims, wherein the cylindrical piece (37) is located below a middle elevation (L) of the container (30).

4. A pressure filter according to claim 1, wherein at least one deflector, such as a deflector plate (40), is arranged on the inner wall of the cylindrical piece (37) for guiding the travel of the tangentially fed suspension.

5. A pressure filter according to claim 1, wherein deflectors, such as deflector plates, are arranged at a distance from each other on the inner wall of the cylindrical piece (37) for guiding the travel of the tangentially fed suspension.

6. A pressure filter according to any of the preceding claims, wherein a conical, downwards widening extension part with a perforated wall is connected to the bottom part of the cylindrical piece (37).

## Patentansprüche

1. Druckfilter zum Behandeln von Feststoffsuspensionen, umfassend einen Behälter (30) mit
- einer Zufuhrleitung (32) zum Einbringen einer zu filtrierenden Suspension in den Behälter (30) unter Druck,
- einer Auslassleitung (34) zum Entladen der verdickten Suspension aus dem Boden des Behälters (30) und
- einer Vielzahl von röhrenförmigen Filtrierelementen (36), die von einer horizontalen Trägerplatte (35) hängen, wobei durch diese Elemente Filtrat fließt und das Innere dieser Elemente mit einer Filtratkammer kommuniziert, die sich auf der gegenüberliegenden Seite der Trägerplatte (35) befindet, und das Filtrat so angeordnet ist, dass es während einer Filtrierstufe durch eine Filtratauslassleitung (34) entfernt wird, die aus der Filtratkammer austritt,
wobei die Filtrierelemente (36) Feststoff auf ihrer äußeren Oberfläche sammeln, wobei dieser Feststoff so angeordnet ist, dass er periodisch freigesetzt wird, indem das Filtrat in der Filtratkammer gegen den Strom durch die Filtrierelemente (36) geschickt wird, und wobei dieser Feststoff sich auf dem Boden des Behälters (30) absetzt,
**dadurch gekennzeichnet, dass**
ein zylindrisches Stück (37) in dem Behälter (30) unterhalb der Filtrierelemente (36) angeordnet ist und die Zufuhrleitung (32) zum Leiten der Suspension in das Innere des zylindrischen Stückes (37) mit dem zylindrischen Stück (37) verbunden ist,
wobei das zylindrische Stück (37) eine offene obere Oberfläche und eine offene untere Oberfläche aufweist und
wobei ein tangentialer Einlass (38) für die Suspension in dem zylindrischen Stück (37) angeordnet ist, wobei der tangentiale Einlass (38) angeordnet ist, um die Suspension in einer Entfernung von einer inneren Oberfläche der Behälterwand in das Innere des zylindrischen Stücks einzubringen.

2. Druckfilter nach Anspruch 1, wobei das zylindrische Stück (37) konzentrisch mit dem Behälter (30) und in einer Entfernung von der inneren Oberfläche der Behälterwand ist.

3. Druckfilter nach einem der vorstehenden Ansprüche, wobei das zylindrische Stück (37) sich unterhalb einer mittleren Erhöhung (L) des Behälters (30) befindet.

4. Druckfilter nach Anspruch 1, wobei zum Lenken des Wegs der tangential zugeführten Suspension zumindest ein Deflektor, wie eine Deflektorplatte (40), auf der Innenwand des zylindrischen Stücks (37) angeordnet ist.

5. Druckfilter nach Anspruch 1, wobei zum Lenken des Wegs der tangential zugeführten Suspension Deflektoren, wie Deflektorplatten, in einer Entfernung voneinander auf der Innenwand des zylindrischen Stücks (37) angeordnet sind.

6. Druckfilter nach einem der vorstehenden Ansprüche, wobei ein konisches, sich nach unten aufweitendes Erweiterungsteil mit einer perforierten Wand mit dem Bodenteil des zylindrischen Stücks (37) verbunden ist.

## Revendications

1. Filtre à pression pour traiter des suspensions de solides, comprenant un récipient (30) ayant
- un conduit d'alimentation (32) pour introduire une suspension à filtrer dans le récipient (30) sous pression,
- un conduit de sortie (34) pour décharger la suspension épaissie depuis le fond du récipient (30), et
- une pluralité d'éléments de filtrage tubulaires (36) suspendus à une plaque de support horizontale (35), éléments à travers lesquels un filtrat s'écoule, et éléments dont l'intérieur communique avec une chambre de filtrat située sur le côté opposé de la plaque de support (35), et le filtrat est agencé pour être enlevé pendant une étape de filtrage à travers un conduit de sortie de filtrat (34) sortant de la chambre de filtrat, dans lequel les éléments de filtrage (36) collectent de la matière solide sur leur surface extérieure, laquelle matière solide est agencée pour être libérée de façon périodique en faisant en sorte que le filtrat dans la chambre de filtrat passe à contre-courant à travers les éléments de filtrage (36), et laquelle matière solide se décante sur le fond du récipient (30),
**caractérisé en ce que**
une pièce cylindrique (37) est agencée dans le récipient (30) au-dessous des éléments de filtrage (36), et le conduit d'alimentation (32) est relié à la pièce cylindrique (37) pour mener la suspension jusque dans l'intérieur de la pièce cylindrique (37),
dans lequel la pièce cylindrique (37) a une surface supérieure ouverte et une surface inférieure ouverte, et
dans lequel une entrée tangentielle (38) pour la suspension est agencée dans la pièce cylindrique (37), l'entrée tangentielle (38) étant agencée de façon à introduire la suspension à une certaine distance d'une surface intérieure de la paroi de récipient jusque dans l'intérieur de la pièce cylindrique.

2. Filtre à pression selon la revendication 1, dans lequel la pièce cylindrique (37) est concentrique avec le récipient (30) et est à une certaine distance de la surface intérieure de la paroi de récipient.

3. Filtre à pression selon l'une quelconque des revendications précédentes, dans lequel la pièce cylindrique (37) est située au-dessous d'une élévation intermédiaire (L) du récipient (30).

4. Filtre à pression selon la revendication 1, dans lequel au moins un déflecteur, tel qu'une plaque de déflecteur (40), est agencé sur la paroi intérieure de la pièce cylindrique (37) pour guider le déplacement de la suspension alimentée de façon tangentielle.

5. Filtre à pression selon la revendication 1, dans lequel des déflecteurs, tels que des plaques de déflecteur, sont agencés à une certaine distance les uns des autres sur la paroi intérieure de la pièce cylindrique (37) pour guider le déplacement de la suspension alimentée de façon tangentielle.

6. Filtre à pression selon l'une quelconque des revendications précédentes, dans lequel une partie d'extension conique s'élargissant vers le bas, avec une paroi perforée, est reliée à la partie de fond de la pièce cylindrique (37).
